# DEMANDE DE BREVET EUROPEEN

(11) **EP 1 648 076 A1**
(43) Date de publication de la demande: **19.04.2006**
(21) Numéro de dépôt: 05292014.7
(22) Date de dépôt: 28.09.2005
(51) Int. Cl.: H02K 11/00, H02K 15/14

(54) **Motoréducteur comprenant une carte de contrôle et un porte-balais et son procédé d'assemblage**

(30) Priorité: 15.10.2004 FR 0410940
(71) Demandeur: ArvinMeritor Light Vehicle Systems-France, 45600 Sully sur Loire (FR)
(72) Inventeur: Robin, Laurent, 41240 Ouzouer-Le-Marché (FR); Lebourgeois, Mickaël, 45270 Auvilliers en Gatinais (FR); Bena, Marie-Pierre, 45620 Cerdon du Loiret (FR)
(74) Mandataire: Hirsch & Associés

(57) **Abrégé**

L'invention se rapporte à un motoréducteur (10) comprenant
- une carte (22) de contrôle du motoréducteur et
- un porte-balais (20) en contact électrique avec la carte, le porte-balais (20) bloquant la carte (22) de contrôle dans le motoréducteur (10).

L'invention se rapporte aussi à un procédé d'assemblage d'un motoréducteur

L'invention permet de faciliter le montage du motoréducteur et ainsi réduire les coûts d'assemblage.

## Description

La présente invention concerne un motoréducteur et un procédé de montage d'un motoréducteur.

Les véhicules peuvent être pourvus d'équipements tels que des lève-vitres ou des toits ouvrants. Ces équipements peuvent être actionnés électriquement notamment par un motoréducteur. Ce dernier peut comprendre un moteur entraînant un réducteur, le réducteur étant relié à l'ouvrant pour l'entraînement. Les enroulements du moteur sont alimentés par l'intermédiaire d'un collecteur percevant le courant d'alimentation via des balais ; les balais sont fixes par rapport au motoréducteur, et sont en contact électrique par frottement avec le collecteur entraîné en rotation par le moteur. Par ailleurs, le motoréducteur peut être pourvu d'une carte de contrôle, contrôlant le fonctionnement du moteur. Le motoréducteur comporte donc une pluralité de composants, un problème se pose pour l'assemblage des composants.

Pour cela l'invention propose un motoréducteur comprenant une carte de contrôle du motoréducteur et un porte-balais en contact électrique avec la carte, le porte-balais bloquant la carte de contrôle dans le motoréducteur.

Selon une variante, le porte-balais bloque la carte en translation dans le motoréducteur.

Selon une variante, le motoréducteur comprend un rotor, le porte-balais bloquant la carte en translation le long du rotor.

Selon une variante, le motoréducteur comprend en outre un rotor et des balais, le porte-balais comportant deux branches supportant les balais diamétralement opposés par rapport au rotor.

Selon une variante, le porte-balais est en contact électrique avec la carte de contrôle par les branches.

Selon une variante, le motoréducteur comporte un carter, le porte-balais sollicitant la carte contre le carter.

L'invention se rapporte aussi à un procédé d'assemblage d'un motoréducteur tel que décrit précédemment, le procédé comprenant les étapes de
- insertion de la carte de contrôle et du porte-balais dans le motoréducteur,
- blocage du porte-balais et mise en contact électrique du porte-balais et de la carte.

Selon une variante, le motoréducteur comporte un emplacement de rotor, l'insertion de la carte et du porte-balais étant le long de l'emplacement du rotor.

Selon une variante, le motoréducteur comporte un réducteur et un carter, le réducteur étant dans le carter, la carte de contrôle et le porte-balais étant insérés dans le carter.

Selon une variante, l'insertion du porte-balais dans le carter est réalisée en force.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue en coupe longitudinale d'un motoréducteur;
- figure 2, une vue en coupe transversale du motoréducteur ;
- figure 3, une vue d'un porte-balais ;
- figure 4, une vue latérale d'un porte-balais.

L'invention se rapporte à un motoréducteur comprenant une carte de contrôle du motoréducteur et un porte-balais ; le porte-balais est en contact électrique avec la carte et bloque la carte dans le motoréducteur. Ceci permet de faciliter le montage du motoréducteur et ainsi réduire les coûts d'assemblage.

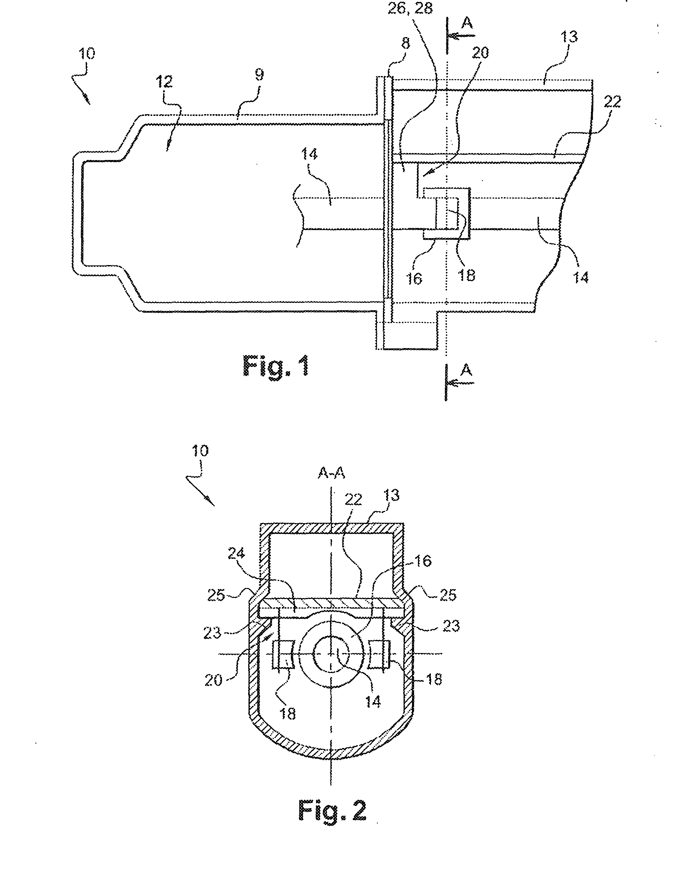

La figure 1 montre une vue en coupe longitudinale d'un motoréducteur 10. Le motoréducteur 10 comporte un moteur 12 et un carter 13, le moteur étant fixé au carter 13. Le moteur 12 comprend un stator 9 et un rotor 14 composé d'enroulements sur un arbre en rotation (sur le dessin, seul l'axe est représenté). Le rotor 14 entraîne lui-même un réducteur non représenté, composé d'une vis sans fin (sur le rotor) et d'une roue dentée. Le réducteur est dans le carter 13. Les enroulements du rotor 14 sont alimentés par l'intermédiaire d'un collecteur 16 solidaire du rotor 14 et de balais 18 transmettant le courant d'alimentation vers le moteur. Les balais 18 permettent la transmission du courant d'alimentation vers le collecteur 16, alors même que ce dernier est en rotation. Les balais 18 sont portés dans le motoréducteur à l'aide d'un porte-balais 20. Le porte-balais 20 permet de maintenir et positionner les balais 18 en regard du collecteur 16 ; les balais 18 sont diamétralement opposés par rapport au collecteur 16. Le moteur est fixé à l'interface 8 du carter 13 comportant une ouverture d'introduction du rotor 14.

Le motoréducteur 10 comporte aussi un carte 22 de contrôle du fonctionnement du motoréducteur. Par exemple, la carte 22 contrôle la mise en marche du moteur, l'inversion du sens de rotation, ou son arrêt. La carte est du type circuit imprimé. Le porte-balais 20 est relié électriquement à la carte 22, la carte 22 permettant alors de contrôler le passage du courant électrique vers le porte-balais 20. Par ailleurs, le porte-balais 20 bloque la carte 22 dans le motoréducteur 10, ce qui permet de s'affranchir d'organes supplémentaires de blocage de la carte ; ceci permet de faciliter l'assemblage du motoréducteur en ce sens que l'insertion du porte-balais 20 permet simultanément le positionnement du porte balais et l'immobilisation de la carte 22.

La carte 22 est dans le motoréducteur, dans le carter 13. Ainsi, on évite l'utilisation d'un logement supplémentaire pour la carte ce qui a pour effet de rendre plus compact le motoréducteur. On réduit donc l'encombrement du motoréducteur. Par ailleurs, la suppression d'un logement extérieur pour la carte entraîne une réduction des coûts de fabrication. Le carter 13 peut par exemple comporter des rainures dans lesquelles la carte 22 est insérée. Le porte-balais 20, élément distinct de la carte 22, peut alors bloquer en translation la carte 22, en particulier dans les rainures.

La carte 22 peut s'étendre parallèlement (selon une dimension la plus grande de la carte) au rotor 14, le porte-balais 20 bloquant la carte 22 en translation le long du rotor 14. Ceci est avantageux pour l'assemblage du motoréducteur car le rotor 14 et la carte 22 peuvent être insérés selon le même axe, la carte 22 étant alors immobilisée de manière simple par le porte-balais 20 selon cet axe.

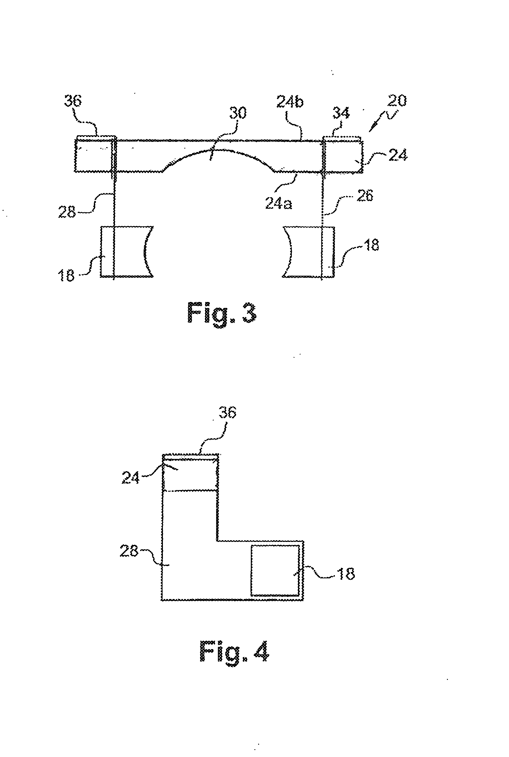

La figure 2 montre une vue en coupe transversale du motoréducteur 10. Sont visibles en section le rotor 14, la carte 22 et le porte-balais 20 portant les balais 18. Les balais 18 sont maintenus à la hauteur du collecteur 16. Le porte-balais 20 comporte une plaque 24 et des branches 26, 28 supportant les balais 18 (voir figure 3). La plaque 24 permet le blocage de la carte 22, notamment en étant insérée dans le carter le long du rotor 14. Les branches sont choisies en taille et en forme pour permettre le positionnement des balais 18 à la hauteur du collecteur 16.

Le blocage de la carte 22 par le porte-balais 20 peut être réalisé par la sollicitation de la carte 22 par le porte-balais 20 contre le carter 13. Par exemple, le porte-balais 20 peut bloquer en translation la carte 22 par l'introduction en force du porte-balais 20 dans les rainures de réception de la carte (ces rainures sont situées dans le carter, le long d'épaulements 25 du carter 13). La carte 22 est alors bloquée entre le fond du carter 13 et le porte-balais 20 à l'ouverture du carter. Alternativement, le porte-balais 20 peut plaquer la carte 22 contre le carter 13 dans une direction transversale au rotor 14, vers le haut sur la figure 2. L'embouchure des rainures de réception de la carte 22 à l'interface 8 du carter dans le carte 13 peut être élargie transversalement à la carte 22 en une cavité ; le porte-balais 20 peut être logé dans la cavité, au moins partiellement entre le rotor 14 et la carte 22. Sur la figure 2, le porte-balais 20 est au moins partiellement sous la carte 22 et sollicite cette dernière contre le carter 13.

De plus, pour améliorer la robustesse du blocage de la carte, des languettes 23 du carter 13 en saillie dans la cavité peuvent être prévues. Les languettes 13 sollicitent élastiquement le porte-balais 20 contre la carte 22, et ainsi, la carte 22 contre le carter 13.

Par ailleurs la présence du porte-balais 20 entre la carte 22 et le rotor 14 permet d'établir facilement le contact électrique comme cela sera explicité plus bas en relation avec la figure 3.

La figure 3 montre une vue du porte-balais 20. Le porte-balais 20 comporte la plaque 24 d'où s'étendent les branches 26, 28. Le porte-balais 20 permettant de maintenir les balais 18 au niveau du collecteur présentant un diamètre plus important que le rotor 14, le porte-balais 20 peut comporter un évidement 30 pour permettre la rotation du collecteur. Ceci permet d'éviter d'augmenter l'encombrement du motoréducteur par le porte-balais 20.

Les branches 26, 28 s'étendent de part et d'autre de la plaque 24. Elles sont en saillie d'un côté 24a de la plaque 24 pour le maintien des balais 18. Les branches 26, 28 s'étendent transversalement à la plaque 24. Les branches sont aussi en saillie de l'autre côté 24b de la plaque 24 pour permettre la mise en contact avec la carte de contrôle 22.

Le contact électrique du porte-balais peut se faire de la manière suivante. Du côté 24b de la plaque 24, les branches 26, 28 sont plaquées contre la plaque 24 ; les branches 26, 28 forment ainsi des pistes conductrices 34, 36 susceptibles d'établir le contact avec la carte 22. En relation avec la figure 2, le porte-balais 20 est entre la carte 22 et le rotor 14 ; les pistes conductrices 34, 36 sont appliquées contre la carte 22, comportant elle-même des zones de contact électrique. La sollicitation du porte-balais 20 contre la carte 22 par les languettes 23 du carter permet d'assurer le contact électrique.

La figure 4 montre une vue latérale du porte-balais 20. Sont représentés la plaque 24 en section, une des branches 28 s'étendant de la plaque 24, une piste conductrice 36 et un balais 18 porté par le porte-balais 20. La branche 28 est en forme de L, de sorte à déporter le balais 18 le long du rotor vers le collecteur 16. La forme de la branche 28 n'est pas limitée à celle décrite sur la figure 4, mais est adaptée à l'espace disponible dans le motoréducteur et à la position du porte-balais 20, bloquant la carte 22, par rapport au collecteur 16. Les branches peuvent en outre permettre par leur déformation une sollicitation élastique des balais 18 contre le collecteur 16 ; ceci assure un bon contact électrique entre le collecteur et les balais, même après une longue période d'utilisation.

Par ailleurs, un tel motoréducteur peut faire l'objet d'un procédé d'assemblage. Le motoréducteur peut comporter un moteur avec un rotor en rotation, un carter auquel est fixé le moteur et dans lequel s'étend le rotor, ainsi qu'un réducteur dans la carter, le réducteur étant entraîné par le rotor.

Avant d'assembler le moteur et son rotor au carter, le procédé propose l'assemblage de la carte de contrôle et le porte-balais au motoréducteur. Le procédé comprend une étape d'insertion de la carte de contrôle et une étape d'insertion du porte-balais dans le motoréducteur. Plus particulièrement, la carte de contrôle et le porte-balais, sont insérés dans le carter, le long de l'emplacement du rotor. L'insertion de la carte et du porte-balais selon la direction d'insertion du rotor permet de ne prévoir qu'une ouverture commune dans le carter pour ces éléments, ce qui simplifie la structure du carter.

Le procédé comprend ensuite une étape de blocage du porte-balais 20 et de mise en contact électrique entre la carte 22 et le porte-balais 20. Ainsi, l'assemblage de la carte et du porte-balais est simple et rapide et ne nécessite pas d'opération supplémentaire. Le blocage du porte-balais dans le motoréducteur se fait par exemple en coinçant la carte 22 contre le carter 13 par le porte-balais 20, notamment dans une cavité prévue à cet effet ; de manière avantageuse, le porte-balais est insérée en force dans le carter, ce qui améliore le blocage de la carte 22 dans le carter 13 et le contact électrique de la carte 22 et du porte-balais 20.

Le procédé peut en outre comprendre l'assemblage du rotor 14 au carter 13. Le rotor 14 peut supporter le collecteur 16 et des enroulements ; le rotor 14 est alors introduit dans le carter, parallèlement à la carte 22 bloquée par le porte-balais 20. Ainsi, la carte 22 et le porte-balais 20 immobilisés n'entravent pas l'insertion du rotor 14. De plus, les branches 26, 28 du porte-balais 20 peuvent être écartées de sorte que le collecteur 16 puisse être positionné entre les balais 18 pour établir le contact électrique. Le moteur est achevé d'être monté par assemblage et fixation au carter 13 du boîtier 9 contenant le stator.

Bien entendu, la présente invention n'est pas limitée aux modes de réalisations décrits à titre d'exemple; ainsi, le motoréducteur n'est pas limité à un dispositif d'entraînement d'ouvrant pour véhicule.

## Revendications

1. Un motoréducteur (10) comprenant
- un rotor (14),
- une carte (22) de contrôle du motoréducteur et
- un porte-balais (20) en contact électrique avec la carte, le porte-balais (20) bloquant la carte (22) de contrôle dans le motoréducteur (10), la carte et le porte-balais étant adaptés à être insérés selon la direction de l'axe du rotor.

2. Le motoréducteur selon la revendication précédente, **caractérisé en ce que** le porte-balais (20) bloque la carte (22) en translation dans le motoréducteur.

3. Le motoréducteur selon la revendication 1 ou 2, **caractérisé en ce que** le porte-balais (20) bloque la carte (22) en translation le long du rotor (14).

4. Le motoréducteur selon l'une des revendications 1 à 3, **caractérisé en ce que** le motoréducteur comprend en outre des balais (18), le porte-balais (20) comportant deux branches (26, 28) supportant les balais (18) diamétralement opposés par rapport au rotor (14).

5. Le motoréducteur selon l'une des revendications 1 à 4, **caractérisé en ce que** le porte-balais (20) est en contact électrique avec la carte (22) de contrôle par les branches (26, 28).

6. Le motoréducteur selon l'une des revendications 1 à 5, **caractérisé en ce que** le motoréducteur comporte un carter (13), le porte-balais (20) sollicitant la carte (22) contre le carter (13).

7. Un procédé d'assemblage d'un motoréducteur selon l'une des revendications précédentes, le procédé comprenant les étapes de
- insertion de la carte (22) de contrôle et du porte-balais (20) dans le motoréducteur selon la direction de l'axe du rotor,
- blocage du porte-balais (20) et mise en contact électrique du porte-balais (20) et de la carte.

8. Le procédé selon la revendication 7, **caractérisé en ce que** le motoréducteur comporte un emplacement de rotor (14), l'insertion de la carte et du porte-balais étant le long de l'emplacement du rotor (14).

9. Le procédé selon la revendication 7 ou 8, **caractérisé en ce que** le motoréducteur comporte un réducteur et un carter, le réducteur étant dans le carter, la carte de contrôle et le porte-balais étant insérés dans le carter.

10. Le procédé selon la revendication 9, **caractérisé en ce que** l'insertion du porte-balais dans le carter est réalisée en force.
